(19) Europäisches Patentamt / European Patent Office / Office européen des brevets

(11) **EP 4 521 308 A1**

(12) **EUROPEAN PATENT APPLICATION**

(43) Date of publication:
**12.03.2025 Bulletin 2025/11**

(21) Application number: **23382923.3**

(22) Date of filing: **11.09.2023**

(51) International Patent Classification (IPC):
**G06N 10/60** (2022.01)   **G06N 5/01** (2023.01)
**G06Q 10/04** (2023.01)   **G06Q 40/06** (2012.01)

(52) Cooperative Patent Classification (CPC):
**G06N 10/60; G06N 5/01; G06Q 10/04; G06Q 40/06**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Multiverse Computing S.L.**
**20014 Donostia-San Sebastian (ES)**

(72) Inventors:
- ORÚS, Roman
  **20014 San Sebastián (ES)**
- RODRIGUEZ, Asier
  **20014 San Sebastián (ES)**
- PALMER, Samuel
  **Toronto (CA)**
- MUGEL, Samuel
  **Toronto (CA)**

(74) Representative: **Balder IP Law, S.L.**
**Paseo de la Castellana 93
5ª planta
28046 Madrid (ES)**

(54) **SYSTEM AND METHOD FOR DATA COMPRESSION USING QUANTUM COMPUTING**

(57)   A system and method for data compression using quantum computing are provided. The system receives an initial set of assets and corresponding asset weights. The asset weights are encoded using binary asset holding variables. Cardinality constraints are generated for the asset weights. The cardinality constraints are encoded into qubits. An optimization objective function is minimized using the qubits encoding the cardinality constraints. A subset of assets that replicates the behavior of the initial set of assets is obtained based on the minimized optimization objective function.

EP 4 521 308 A1

## Description

### FIELD

Various embodiments are described herein that generally relate to a system and method for data compression using quantum computing.

### BACKGROUND

The following paragraphs are provided by way of background to the present disclosure. They are not, however, an admission that anything discussed therein is prior art or part of the knowledge of persons skilled in the art.

Classical computers (as opposed to quantum computers) have been used to try to solve the problem of tracking an index with fewer assets than in the original index. The problem is deemed as intractable using classical approaches. A solution to the problem would have applications in financial index tracking, as well as in data compression systems that could be employed in the context of logistics and manufacturing.

For example, financial index tracking is an essential application of portfolio optimization. This is used by financial firms for asset management strategies, or for creating and managing new financial products such as exchange-traded funds (ETFs). Financial indexes often consist of hundreds or thousands of assets. An important task to make it practical to manage such portfolios is replicating the financial index using a limited subset of assets, known as cardinality constraints. Such a constrained portfolio optimization is extremely difficult to solve, and standard algorithms tend to have a very hard time in finding appropriate solutions.

There is a need for a system and method that addresses the challenges and/or shortcomings described above.

### SUMMARY OF VARIOUS EMBODIMENTS

Various embodiments of a system and method for data compression using quantum computing, and computer products for use therewith, are provided according to the teachings herein.

According to one aspect of the invention, there is disclosed a system for data compression using quantum computing, the system comprising at least one processor configured to: receive an initial set of assets and corresponding asset weights; encode the asset weights using binary asset holding variables; generate cardinality constraints for the asset weights; encode the cardinality constraints into qubits; minimize an optimization objective function using the qubits encoding the cardinality constraints, thereby generating a minimized optimization objective function; and obtain a subset of assets that replicates a behavior of the initial set of assets based on the minimized optimization objective function.

In at least one embodiment, the optimization objective function is a quadratic unconstrained binary optimization (QUBO).

In at least one embodiment, each of the assets in the initial set of assets has a weight obtained using binary encoding.

In at least one embodiment, the initial set of assets comprises a discrete number of units limited to a Mersenne number.

In at least one embodiment, the optimization objective function is a cost function to be optimized on a quantum annealer.

In at least one embodiment, the cardinality constraints have a property that introduction of the cardinality constraints makes the optimization objection function non-convex due to selection of the assets being discrete.

In at least one embodiment, the cardinality constraints are encoded into qubits by applying indicator variables with interactions between the binary asset holding variables to eliminate high-order terms.

In at least one embodiment, the optimization objective function is windmill asset allocation optimization to replicate behavior of the target initial set of assets being a target windmill arrangement of windmill assets.

In at least one embodiment, the optimization objective function is satellite asset allocation optimization to replicate behavior of the target initial set of assets being a target satellite arrangement of satellite assets.

In at least one embodiment, the optimization objective function is index tracking optimization to replicate behavior of the target initial set of assets being a target financial index of assets.

According to another aspect of the invention, there is disclosed a method for data compression using quantum computing, the method comprising: receiving an initial set of assets and corresponding asset weights; encoding the asset weights using binary asset holding variables; generating cardinality constraints for the asset weights; encoding the cardinality constraints into qubits; minimizing an optimization objective function using the qubits encoding the cardinality constraints, thereby generating a minimized optimization objective function; and obtaining a subset of assets that replicates a behavior of the initial set of assets based on the minimized optimization objective function.

Other features and advantages of the present application will become apparent from the following detailed description taken together with the accompanying drawings. It should be understood, however, that the detailed description and the specific examples, while indicating preferred embodiments of the application, are given by way of illustration only, since various changes and modifications within the spirit and scope of the application will become apparent to those skilled in the art from this detailed description.

## BRIEF DESCRIPTION OF THE DRAWINGS

For a better understanding of the various embodiments described herein, and to show more clearly how these various embodiments may be carried into effect, reference will be made, by way of example, to the accompanying drawings which show at least one example embodiment, and which are now described. The drawings are not intended to limit the scope of the teachings described herein.

FIG. 1 shows a block diagram of an example embodiment of a system and method for data compression using quantum computing.

FIG. 2 shows a flow chart of an example embodiment of a method of data compression using quantum computing.

FIG. 3 shows a schematic diagram of an example of qubit interactions for a cardinality constraint implementation.

FIGS. 4A-4C show graphs of an example of optimized tracking portfolios for Nasdaq-100 for different values of the cardinality constraints C=25, 50, and 75 respectively.

FIG. 5 shows a graph of an example of ab S&P 500 tracking portfolio with C = 50.

FIGS. 6A-6B show graphs of an example of enhanced Nasdaq-100 (NDX) tracking portfolios with C = 25 and varying covariance minimization ratios 0.2, 0.5 and 0.95.

Further aspects and features of the example embodiments described herein will appear from the following description taken together with the accompanying drawings.

## DETAILED DESCRIPTION OF THE EMBODIMENTS

Various embodiments in accordance with the teachings herein will be described below to provide an example of at least one embodiment of the claimed subject matter. No embodiment described herein limits any claimed subject matter. The claimed subject matter is not limited to devices, systems, or methods having all of the features of any one of the devices, systems, or methods described below or to features common to multiple or all of the devices, systems, or methods described herein. It is possible that there may be a device, system, or method described herein that is not an embodiment of any claimed subject matter. Any subject matter that is described herein that is not claimed in this document may be the subject matter of another protective instrument, for example, a continuing patent application, and the applicants, inventors, or owners do not intend to abandon, disclaim, or dedicate to the public any such subject matter by its disclosure in this document.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures, and components have not been described in detail so as not to obscure the embodiments described herein. Also, the description is not to be considered as limiting the scope of the embodiments described herein.

It should also be noted that the terms "coupled" or "coupling" as used herein can have several different meanings depending in the context in which these terms are used. For example, the terms coupled or coupling can have a mechanical or electrical connotation. For example, as used herein, the terms coupled or coupling can indicate that two elements or devices can be directly connected to one another or connected to one another through one or more intermediate elements or devices via an electrical signal, electrical connection, or a mechanical element depending on the particular context.

It should also be noted that, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

It should be noted that terms of degree such as "substantially", "about" and "approximately" as used herein mean a reasonable amount of deviation of the modified term such that the end result is not significantly changed. These terms of degree may also be construed as including a deviation of the modified term, such as by 1%, 2%, 5%, or 10%, for example, if this deviation does not negate the meaning of the term it modifies.

Furthermore, the recitation of numerical ranges by endpoints herein includes all numbers and fractions subsumed within that range (e.g., 1 to 5 includes 1, 1.5, 2, 2.75, 3, 3.90, 4, and 5). It is also to be understood that all numbers and fractions thereof are presumed to be modified by the term "about" which means a variation of up to a certain amount of the number to which reference is being made if the end result is not significantly changed, such as 1%, 2%, 5%, or 10%, for example.

It should also be noted that the use of the term "window" in conjunction with describing the operation of any system or method described herein is meant to be understood as describing a user interface for performing initialization, configuration, or other user operations.

The example embodiments of the devices, systems, or methods described in accordance with the teachings herein may be implemented as a combination of hardware and software. For example, the embodiments described herein may be implemented, at least in part, by using one or more computer programs, executing on one or more programmable devices comprising at least one processing element and at least one storage element (i.e., at least one volatile memory element and at least one non-volatile memory element). The hardware may comprise input devices including at least one of a touch screen, a keyboard, a mouse, buttons, keys, sliders, and the like, as well as one or more of a display, a printer, and the like depending on the implementation of the hardware.

It should also be noted that there may be some elements that are used to implement at least part of the embodiments described herein that may be implemented via software that is written in a high-level procedural language such as object oriented programming. The program code may be written in $C^{++}$, C#, JavaScript, Python, or any other suitable programming language and may comprise modules or classes, as is known to those skilled in object-oriented programming. Alternatively, or in addition thereto, some of these elements implemented via software may be written in assembly language, machine language, or firmware as needed. In either case, the language may be a compiled or interpreted language.

At least some of these software programs may be stored on a computer readable medium such as, but not limited to, a ROM, a magnetic disk, an optical disc, a USB key, and the like that is readable by a device having a processor, an operating system, and the associated hardware and software that is necessary to implement the functionality of at least one of the embodiments described herein. The software program code, when read by the device, configures the device to operate in a new, specific, and predefined manner (e.g., as a specific-purpose computer) in order to perform at least one of the methods described herein.

At least some of the programs associated with the devices, systems, and methods of the embodiments described herein may be capable of being distributed in a computer program product comprising a computer readable medium that bears computer usable instructions, such as program code, for one or more processing units. The medium may be provided in various forms, including non-transitory forms such as, but not limited to, one or more diskettes, compact disks, tapes, chips, and magnetic and electronic storage. In alternative embodiments, the medium may be transitory in nature such as, but not limited to, wire-line transmissions, satellite transmissions, internet transmissions (e.g., downloads), media, digital and analog signals, and the like. The computer useable instructions may also be in various formats, including compiled and non-compiled code.

In accordance with the teachings herein, there are provided various embodiments for a system and method for data compression using quantum computing, and computer products for use therewith.

## 1 Overview

Quantum computers can be used to solve problems that would normally be intractable using classical computing approaches. One such problem is how to compress data in the form of a set of assets while maintaining the same behavior of that initial set of assets. One solution to this problem is to use quantum computing to generate a subset of assets that replicates the behavior of the initial set of assets. The proposed solution is more efficient than classical approaches, which deem the problem as intractable. It has applications in financial index tracking, as well as in data compression systems that could be employed in the context for logistics and manufacturing.

In particular, quantum annealing can be used to construct exact cardinality constrained portfolios to allow for practical, real-world management of financial index tracking portfolios. The solutions are built using quantum computers that are commercially available today.

In addition, this solution also solves a broader problem in data science: data compression. In effect, the system and method proposed is just about the replicability of a feature with fewer data. This is exactly the data compression problem, that one can find everywhere in data science and engineering. The proposed system and method work as well in this context using quantum computing.

In what follows, a particular solution is proposed for the specific case of financial index tracking and ETFs.

## 2.1 System Structure

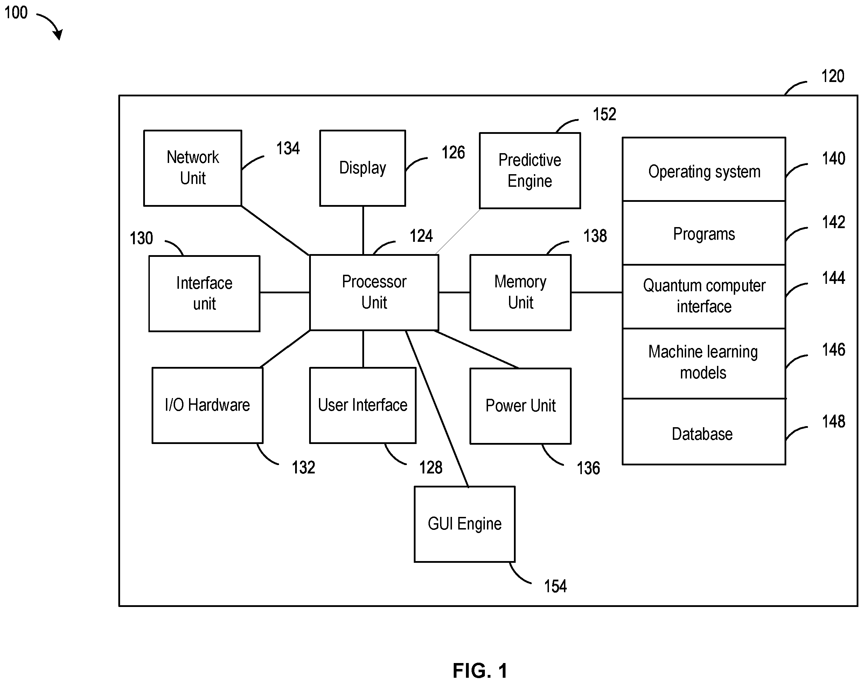

Reference is first made to FIG. 1, showing a block diagram of an example embodiment of system 100 for data compression using quantum computing. The system 100 includes at least one server 120. The server 120 may communicate with one or more user devices (not shown), for example, wirelessly or over the Internet. The system 100 may also be referred to as a machine learning system when used as such.

The user device may be a computing device that is operated by a user. The user device may be, for example, a smartphone, a smartwatch, a tablet computer, a laptop, a virtual reality (VR) device, or an augmented reality (AR) device. The user device may also be, for example, a combination of computing devices that operate together, such as a smartphone and a sensor. The user device may also be, for example, a device that is otherwise operated by a user, such as a drone, a robot, or remote-controlled device; in such a case, the user device may be operated, for example, by a user through a personal computing device (such as a smartphone). The user device may be configured to run an application (e.g., a mobile app) that communicates with other parts of the system 100, such as the server 120.

The server 120 may run on a single computer, including a processor unit 124, a display 126, a user interface 128, an interface unit 130, input/output (I/O) hardware 132, a network unit 134, a power unit 136, and a memory unit (also referred to as "data store") 138. In other embodiments, the server 120 may have more or less components but generally function in a similar manner. For example, the server 120 may be implemented using more than one computing device.

The processor unit 124 may include a standard processor, such as the Intel Xeon processor, for example. Alternatively, there may be a plurality of processors that are used by the processor unit 124, and these processors may function in parallel and perform certain functions. The display 126 may be, but not limited to, a computer monitor or an LCD display such as that for a tablet device. The user interface 128 may be an Application Programming Interface (API) or a web-based application that is accessible via the network unit 134. The network unit 134 may be a standard network adapter such as an Ethernet or 802.1 1x adapter.

The processor unit 124 may execute a predictive engine 152 that functions to provide predictions by using machine learning models 146 stored in the memory unit 138. The predictive engine 152 may build a predictive algorithm through machine learning. The training data may include, for example, image data, video data, audio data, and text.

The processor unit 124 can also execute a graphical user interface (GUI) engine 154 that is used to generate various GUIs. The GUI engine 154 provides data according to a certain layout for each user interface and also receives data input or control inputs from a user. The GUI then uses the inputs from the user to change the data that is shown on the current user interface, or changes the operation of the server 120 which may include showing a different user interface.

The memory unit 138 may store the program instructions for an operating system 140, program code 142 for other applications, a quantum computer interface 144, a plurality of machine learning models 146, and a database 148. The machine learning models 146 may include, but are not limited to, image recognition and categorization algorithms based on deep learning models and other approaches. The database 148 may be, for example, a local database, an external database, a database on the cloud, multiple databases, or a combination thereof.

The quantum computer interface 144 may store the program instructions to operate a quantum computer. (Unless specifically stated, reference to "a quantum computer" can also mean "one or more quantum computers".) These program instructions may include computer instructions to operate the quantum computer directly or through middleware. The quantum computer may be, for example, a universal quantum computer or a quantum annealer.

In at least one embodiment, the machine learning models 146 include a combination of convolutional and recurrent neural networks. Convolutional neural networks (CNNs) may be designed to recognize images or patterns. CNNs can perform convolution operations, which, for example, can be used to classify regions of an image, and see the edges of an object recognized in the image regions. Recurrent neural networks (RNNs) can be used to recognize sequences, such as text, speech, and temporal evolution, and therefore RNNs can be applied to a sequence of data to predict what will occur next. Accordingly, a CNN may be used to read what is happening on a given image at a given time, while an RNN can be used to provide an informational message.

The programs 142 comprise program code that, when executed, configures the processor unit 124 to operate in a particular manner to implement various functions and tools for the system 100.

## 2.2 Method Overview

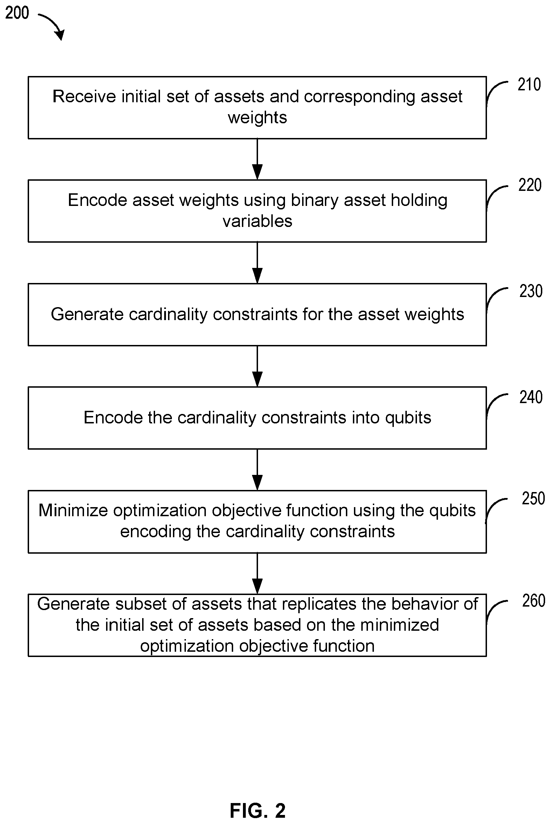

FIG. 2 shows a flow chart of an example embodiment of a method 200 of data compression using quantum computing. The method 200 may be performed by the system 100.

At 210, the system 100 receives an initial set of assets and corresponding asset weights. Each of the assets in the initial set of assets may have a weight obtained using binary encoding. The initial set of assets may comprise a discrete number of units limited to a Mersenne number.

Alternatively, the system 100 may retrieve the initial set of assets and corresponding asset weights from the database 150.

At 220, the system 100 encodes the asset weights using binary asset holding variables.

At 230, the system 100 generates cardinality constraints for the asset weights. The cardinality constraints may have a property that introduction of the cardinality constraints makes the optimization objection function non-convex due to selection of the assets being discrete.

At 240, the system 100 encodes the cardinality constraints into qubits. The cardinality constraints may be encoded into qubits by applying indicator variables with interactions between the binary asset holding variables to eliminate high-order terms.

At 250, the system 100 minimizes an optimization objective function using the qubits encoding the cardinality constraints, thereby generating a minimized optimization objective function. The optimization objective function may be a quadratic unconstrained binary optimization (QUBO). The optimization objective function may be a cost function to be optimized on a quantum annealer.

The optimization objective function may be a specific type of asset allocation optimization to replicate behavior of the target initial set of assets being a target arrangement of physical or data assets. For example, the optimization objective function may be a windmill asset allocation optimization to replicate behavior of the target initial set of assets being a target windmill arrangement of windmill assets. Also, for example, the optimization objective function may be a satellite asset allocation optimization to replicate behavior of the target initial set of assets being a target satellite arrangement of satellite assets. Also, for example, the optimization objective function may be index tracking optimization to replicate behavior of the target initial set of assets being a target financial index of assets.

At 260, the system 100 obtains a subset of assets that replicates the behavior of the initial set of assets based on the minimized optimization objective function.

During execution (or after completion) of method 200, the system 100 may output the result of any calculations or determinations, for example, on some output device of the system 100 (such as a display or speakers).

The system 100 may carry out some or all of the steps of method 200 iteratively to carry out data compression. Alternatively, or in addition, system 100 may carry out some or all of the steps of method 200 in parallel.

The processing performed by the various steps of method 200 are described in further detail in sections 2 to 4, providing additional detail on how the various steps may work.

### 3 Quantum Portfolio Optimization

Quantum portfolio optimization relies on transforming the problem into a quadratic unconstrained binary optimization (QUBO) that can be embedded as interactions between a set of quantum bits (qubits) on a quantum computer. The key ingredient is encoding the asset weights as a set of binary variables. If one has a discrete number of units of investments, K, then using binary encoding the weight of an asset $\omega_i$ can be given by

$$\omega_i = \frac{1}{K} \sum_d^D 2^d x_{i,d} \; ; \quad x_{i,d} \in \mathbb{Z}_2 \qquad (1)$$

where $x_{i,d}$ are the binary asset holding variables, and $D$ is the total number of variables per asset, where $\Sigma_d^D X_{i,d} = K$. In this simple case, $K$ is limited to Mersenne numbers with the extension found in Ref.[4] allowing for an arbitrary integer $K$. In general (unless specified otherwise), $K$ is the *resolution* as this controls the minimum increment size of investments. The final cost function optimized on the quantum annealer is

$$\text{argmin}\_\omega \quad -\omega^\mathsf{T} r + \gamma\, \omega^\mathsf{T} \Sigma \omega + (\mathbf{1} \cdot \omega - 1)^2 \qquad (2)$$

where the final term enforces the fully invested portfolio with no leverage constraint. More detailed descriptions on the implementation of quantum portfolio optimization can be found in Refs. [1, 7].

### 4 Cardinality Constraint

### 4.1 Description

Cardinality constraints are used to limit the number of assets in a portfolio (i.e., *data compression* in the machine learning context); the decision to use these constraints can be driven by reducing management costs, transaction costs, or portfolio complexity, or by other investor preferences. One popular application is in financial index tracking where the objective is to replicate the behavior of a large set of assets with a limited subset [8, 9].

The introduction of the cardinality constraint makes the portfolio optimization problem non-convex due to the discrete decision of investing in an asset. The cardinality constrained Markowitz portfolio optimization can be written as

$$\text{Argmin}\_(Z,\omega) \ -(Z\omega)^\mathsf{T} r + \gamma \ (Z\omega)^\mathsf{T} \Sigma (Z\omega), \qquad (3)$$

$Z = \text{diag}(z)$ ; $z \in Z^N_2$ subject to :

$$z^\mathsf{T}\omega = 1$$
$$z^\mathsf{T}z = C,$$

where z are binary indicator variables for assets that have been invested in ($z_i = 1$) or not ($z_i = 0$), the *diag(.)* operator places these values along the diagonal of a zero matrix, and C is the target portfolio cardinality value. In applications discussed further herein, the application to cardinality-constrained index tracking portfolios takes on the form of

$$\text{argmin}\_(Z, \omega) \ -((Z\omega)^\mathsf{T} r - r)^{\wedge 2} + \gamma \ (Z\omega)^\mathsf{T} \Sigma\omega. \qquad (4)$$

Due to the non-convex nature of the problem, it cannot be solved using conventional convex optimization algorithms. Previous work involving cardinality-constraint optimization has primarily relied on the use of heuristic algorithms such as genetic algorithms [10, 11], or classical approximations [12, 13], which do not scale well for large portfolios and are not practically reliable.

The difficulty of this problem when using classical optimization makes it a technical problem with no clear solution. Quantum computing optimization, which is known to be able to solve complex non-convex optimization problems, is a possible candidate. The problem of cardinality-constrained quantum portfolio optimization and index tracking was recently addressed in Ref. [14] and Ref. [5]. In the former, it was proposed to use an iterative hybrid-classical quantum algorithm to find the discrete subset of assets. However, this approach does not solve the optimization problem directly and relies on multiple optimization procedures. In the latter, the cardinality constraint was formulated directly as QUBO for a quantum annealer, but the formulation relied on an upper bound and was not exact, which allowed for non-invested assets to be incorrectly identified as invested. The technical solutions discussed herein go a step beyond the previous works by formulating the optimization problem in such a way that the cardinality-constrained optimization can be directly and exactly satisfied in a single optimization and is solved using quantum annealing.

### 4.2 Encoding

The non-linear cardinality constraint needs to be formulated as a quadratic problem that can then be efficiently solved using a quantum annealer. When expanding Equations (3) and (4) with respect to the problem variables $z_i$, and $\omega_i$, third and fourth order terms arise. These high-order terms cannot be efficiently encoded on a quantum annealer.

To enforce the cardinalty constraint of a value C, one can add the additional term to minimize

$$\text{min}\_z \ (\mathbf{1} \cdot z - C)^2 \qquad (5)$$

to the portfolio optimization objective function, where z is the vector of asset indicator variables. Now there is a need to formulate the design of the indicator variables $z_i$ for each asset.

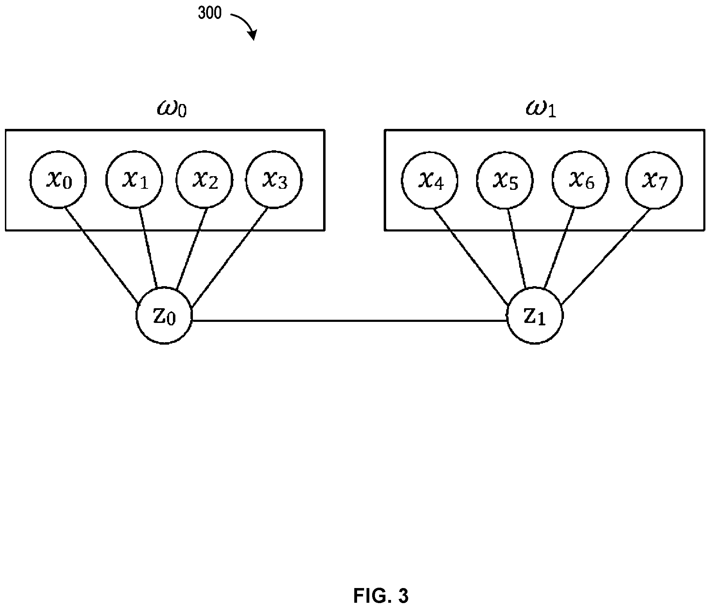

One can take advantage of the discretized portfolio optimization problem and apply indicator variables, $z_i$, with interactions between the discrete holding variables as shown in FIG. 3. Classically, this approach would be avoided because of the NP-hardness; however, taking advantage of the power of quantum optimizers now makes this a feasible approach.

It is worthwhile noting that for the cardinality constraint to be viable, the following is required

$$\frac{K}{C} \geq 1, \qquad (6)$$

otherwise it is not possible to have C number of assets with minimum holding values to satisfy the total holding and cardinality constraint. From this, one can also see that any active holding in a valid portfolio is bounded by

$$\frac{1}{K} \leq \omega_i \leq \frac{K-C+1}{K}, \qquad (7)$$

which one can use to further reduce the range of integers required to encode the holdings with $K_{max} = K - C + 1$. One can also see from this that one needs to be careful when considering the value of $K$ to allow for upper bounds on the holdings. It is required that inf sup $\omega_i \leq K_{max}$, which implies that it is required that

$$\lfloor K/C \rfloor \leq K_{max}.$$

## 5 Index Tracking

Index tracking optimization aims to replicate the behavior of a target financial index of assets [9], such as the Nasdaq-100 or S&P 500 indexes studied herein, using a tracking portfolio built from a small subset of the index assets. To track the index, it is required that the returns and volatility of the tracking portfolio match as closely as possible. Simply measuring the deviation of the tracking portfolio returns with respect to the target index over a historical period provides a good tracking-error metric and gives robust holdings for outof-sample tracking [9].

**TABLE I**

| N | K | Max % Holding | $K_{max}$ | D | Total Qubits |
|---|---|---|---|---|---|
| 100 | 31 | 20% | 6 | 3 | 40015 |
| 100 | 63 | 20% | 12 | 4 | 500 |
| 100 | 127 | 20% | 25 | 5 | 600 |
| 100 | 255 | 20% | 51 | 6 | 700 |
| 500 | 127 | 20% | 25 | 5 | 3000 |

TABLE I: Problem size given by the number of qubits. The max holding is the rounded integer % of the resolution, and the bit depth is calculated as the maximum number of bits required in a binary encoding scheme to represent the max holding value. The total qubits is given by $N(D + 1)$, where the +1 corresponds to the additional cardinality constraint variables.

$$\epsilon_{TE} = \Sigma_t^T (\omega^{\wedge T} r_t - hat(r)_t)^{\wedge 2}, \qquad (8)$$

where $\omega$ is the tracking portfolio holdings, $r_t$ are the asset returns and $hat(r)_t$ is the target index return. The cardinality constrained index tracking problem has been previously defined in Equation (4) and will be used as the optimization objective function. The full expression being minimized is

$$\text{Argmin\_(w,z)} \ \Sigma_t^T (\omega^T r_t - hat(r)_t)^2 + (\mathbf{1} \cdot \omega - 1)^2 + (\mathbf{1} \cdot z - C)^2 + \Sigma_i^d z_i x_{i,d,} \qquad (9)$$

where the final double summation terms are for the cardinality constraint indicator variable interaction terms.

The quality of the tracking portfolios is measured with respect to the cumulative return series rather than the individual timestep returns. This measure ensures that the total return of the portfolio from the initial holding time is tracked, and that small errors in the timestep returns do not excessively compound, which can result in drift from the index returns over time. The *cumulative return tracking error* (CTE) is defined as

$$\epsilon_{CTE} = \Sigma_t^T ( \Sigma (0 <= t^* <= t) \log(1 + \omega^T r_{t^*}) - \log(1 + hat(r)_{t^*}))^{\wedge}2 \qquad (10)$$

where the additive property of log returns is used.

## 5.1 Data and Setup

In this study, the financial data used are daily returns for the Nasdaq-100 (ticker NDK) and S&P 500 (ticker GSPC). The data is taken over the period of JUN-012021 → MAY-28-2022.

To aid the optimization, the number of qubits can be reduced by defining upper bounds on the asset holdings and using the method in Ref. [4] for the asset encoding. In this instance, a single asset is allowed to have a maximum holding of 20% in the portfolio; for comparison the Nasdaq-100 index has a maximum holding of 13%. Table I summarizes the number of qubits required using the holding bounds. Where $K$ is the total number of units of investment available to allocate, the maximum holding $K_{max}$ is then the rounded integer percentage of the resolution.

**TABLE II**

| | | | | | |
|---|---|---|---|---|---|
| Best Portfolios Nasdaq-100 | | | | | |
| C | K | $\epsilon_{CTE}$ | MRE | MdRE | Vol Error |
| 25 | 31 | 0.00024 | 0.280 | 0.117 | 7.00% |
| 25 | 63 | 0.00012 | 0.205 | 0.071 | 2.00% |
| 25 | 127 | 0.00031 | 0.263 | 0.175 | 1.00% |
| 50 | 63 | 0.00016 | 0.205 | 0.106 | 4.00% |
| 50 | 127 | 0.00017 | 0.141 | 0.115 | 7.00% |
| 50 | 255 | 0.00027 | 0.233 | 0.111 | 4.00% |
| 75 | 127 | 0.00012 | 0.199 | 0.069 | 1.00% |
| 75 | 255 | 0.00033 | 0.229 | 0.182 | 1.00% |
| Best Portfolios S&P 500 | | | | | |
| C | K | $\epsilon_{CTE}$ | MRE | MdRE | Vol Error |
| 50 | 63 | 0.00021 | 0.815 | 0.182 | 0.08% |
| 100 | 255 | 0.00021 | 0.945 | 0.223 | 0.05% |

TABLE II: Index tracking results for the Nasdaq-100 index. MRE is the mean relative error taken over all samples results, and MdRE is the median relative error.

**TABLE III**

| | C | | |
|---|---|---|---|
| K | 25 | 50 | 75 |
| 31 | 70% | n/a | n/a |
| 63 | 100% | 80% | n/a |
| 127 | 100% | 90% | 40% |
| 255 | n/a | 100% | 80% |

TABLE III: Success rates of the 20 D-Wave samples for finding feasible solutions that satisfy all of the problem constraints. $C$ is the problem cardinality, $K$ is the resolution. A value of n/a indicates the experiment was not conducted.

For large numbers of assets, this technique can lead to considerable savings in resources where the unbounded problem size, $K_{max} = K$, would be too large to use with the current quantum solvers which at the time of writing are capped at around 4000 [15].

To solve the QUBO optimization problem, the D-Wave LEAP Hybrid solver is used.

## 5.2 Results

For the index tracking problem various cardinalities, $C$, and holding resolutions, $K$, are investigated. Table II summarizes the optimization results for the Nasdaq-100 and S&P500 tracking, showing the metrics for the best solution in each case. The mean relative error (MRE) and median relative error (MdRE) are taken over the cumulative tracking errors. Both the mean and median are used because the mean can be skewed by a large relative error occurring in only a small section of the tracking; in these examples, this can be observed to sometimes occur near the end of the timeseries.

Twenty 20 samples taken from the D-Wave Leap Hybrid optimizer are used. Firstly, one can see from Table III that the success rate of finding feasible portfolios is very high, being close to 100% in most cases. This indicates that the formulation of the cardinality constraint used herein is extremely effective and reliable for finding feasible solutions.

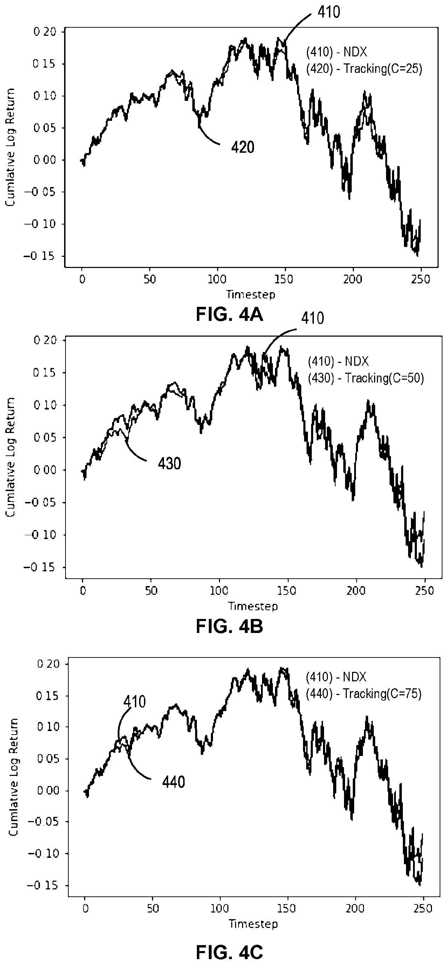

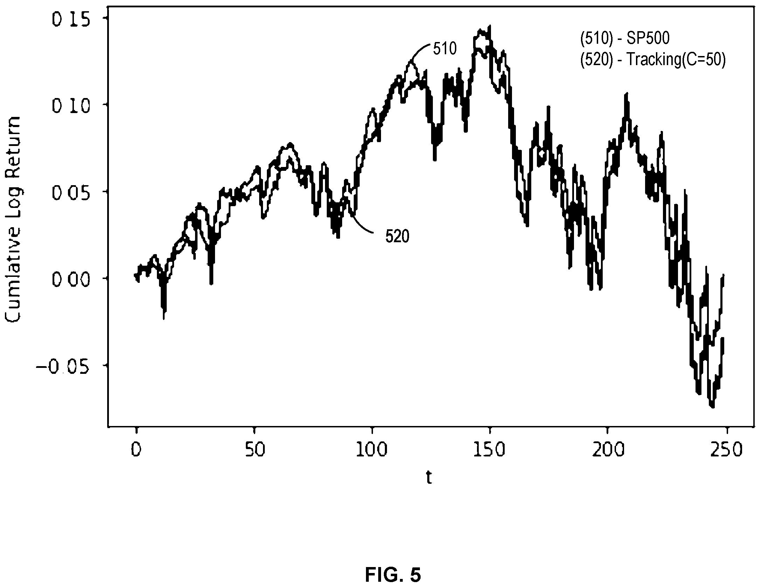

This methodology is then applied to track the 500 asset S&P 500 index. This pushes the limits of the optimization with respect to problem size, see Table I. Even though the problem is now extremely large, one can obtain very good tracking portfolios with tracking errors similar to the 100 asset case. Although the mean relative errors are rather large and close to 100% error in the returns, one can see from FIGS. 4A-4C and FIG. 5 that the majority of the tracking fits very well and is better reflected by the median relative error, which is about 20%. Considering the respectively smaller sizes of the tracking portfolios this is very encouraging. The small errors in the volatility, both with only an excess of 0.01% of risk, also support the quality of both tracking portfolios.

These results show that one can successfully use quantum optimization to replicate large financial indexes with only a small subset of assets. This has important implications in the development of financial products such as exchange traded funds (ETFs).

## 6 Enhanced Index Tracking

As a progression from index tracking, the objective of enhanced index tracking is to create a portfolio that tracks the index behavior closely, but not exactly, in order to create more beneficial investment preferences over the target index. Typical index-beating ETFs rely on leverage, which is not used here; instead, an optimized allocation of the index assets is relied on.

The standard financial indexes tend to be constructed with respect to representation rather than optimized for investment metric performance. For example, the assets in an index may be weighted by market capitalization or other non-technical factors. An enhancement which may be desired is, for example, improving the risk-return profile by finding a good tracking portfolio but with lower covariance compared to the target index; this is the approach taken here.

The expression to minimize is Equation (9) with the additional covariance term $\omega^T\Sigma\omega$. The first term in Equation (9) now becomes

$$\Sigma_t^T \ (1-\lambda) \ (\omega^{\wedge}{\scriptscriptstyle T} r\_t - hat(r)_t)^{\wedge}2 + \lambda( \ \omega^{\wedge}{\scriptscriptstyle T} r_t + \gamma\omega^{\wedge}{\scriptscriptstyle T}\Sigma_t\omega \ ) \qquad (11)$$

The risk-ratio parameter $\lambda$ is used to control the ratio of the Markowitz portfolio optimization cost and tracking cost terms; when $\lambda = 0$ then there is no enhancement. This balances between finding a tracking portfolio with finding the best mean-variance portfolio.

**TABLE IV**

| Best Portfolios | | | | | |
|---|---|---|---|---|---|
| Ratio | $\epsilon_{CTE}$ | Vol Error | MDRSE | Correlation | Sharpe/$\epsilon_{CTE}$ |
| 0.00 | 0.00018 | -3.00% | 0.04 | 0.96 | 2.67 |
| 0.05 | 0.00030 | -20.86% | 0.36 | 0.94 | 20.65 |
| 0.10 | 0.00188 | -27.68% | 0.70 | 0.91 | 16.17 |
| 0.20 | 0.00537 | -26.13% | 0.85 | 0.86 | 11.58 |
| 0.50 | 0.01688 | -21.32% | 1.26 | 0.89 | 9.73 |

TABLE IV: Metrics for the best Nasdaq-100 enhanced tracking portfolios with different covariance minimization ratios. The best Sharpe/$\epsilon_{CTE}$ is taken from 10 samples using the D-Wave Leap Hybrid. MORSE = the median relative Sharpe ratio error with respect to the target index timestep Sharpe ratios. The correlation is measured between the timestep returns, not the cumulative as in the CTE.

## 6.1 Data and Setup

This section focuses on tracking portfolio optimization constrained to 25 assets and using a resolution of $K = 63$. The lower number of assets results in more interesting portfolio compositions, and a resolution of 63 gives the best performing index tracking portfolio as demonstrated in previous results. The risk-ratio parameter is varied over a logarithmic scale to examine the impact of both extremes of values of $\lambda$. The covariance matrices, $\Sigma_t$, for each timestep were calculated using a 90-day rolling window.

## 6.2 Results

The risk-ratio $\lambda$ parameter is varied to explore how the contribution of the mean-variance minimization affects the tracking and provides enhancement to the target index. To measure the enhanced portfolio, one can use the enhancement score as the ratio between the improvement of the Sharpe ratio, and cumulative return tracking error. This is given in the last column of Table IV.

The improvement of the Sharpe ratio is measured as the median relative error over the timesteps of the tracking Sharpe ratio compared to the target index Sharpe ratio. In this application, a large positive error in the Sharpe ratio is beneficial as it indicates a more favorable Sharpe ratio of the tracking portfolio; similarly, a negative volatility error indicates a more beneficial risk profile.

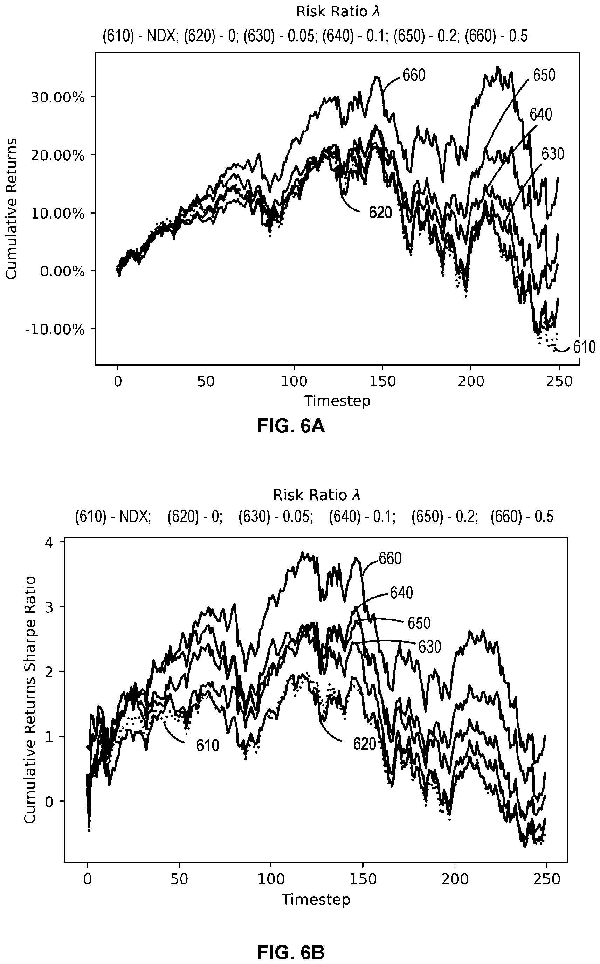

The full set of metrics for the best tracking portfolios, determined by the highest enhancement score, for each of the risk-ratios considered are given in Table IV. FIGS. 6A-6B show the cumulative tracking returns and Sharpe ratio of the best enhanced portfolios compared to the target index. As expected, when $\lambda = 0$, the portfolio tracks the target index very closely in both returns, a 96% correlation, and Sharpe ratio, with only a -3.00% improvement in volatility; this gives the lowest enhancement score. However, after introducing a small amount of mean-variance optimization when $\lambda = 0.05$, one can already see a significant improvement in the risk profile with a 20% improvement in volatility, resulting in a median Sharpe ratio improvement of 36%. Incredibly, this is all whilst retaining a very low cumulative tracking error with 94% timestep returns correlation to the target index. In FIGS. 6A-6B, it can be seen to be very close to $\lambda = 0$ in terms of tracking performance. The combined result of these observations gives $\lambda = 0.05$ the highest enhancement score and demonstrates the extreme practical value of performing enhanced index tracking.

As the risk-ratio, $\lambda$, increases past 0.05, the enhancement score begins to decrease which is due to the decrease in cumulative returns tracking. To improve the Sharpe ratio, excess returns are generated which cause for a deviation from the target index. In Table IV, there is a clear trend that the tracking error increases and returns correlation decreases as $\lambda$ is increased. The volatility improvements stay within the 20-30% range, which indicates that the improvements in the Sharpe ratio are from excess returns. When $\lambda = 0.5$, the mean-variance optimization dominates and generates over 100% (2x) improvement in the Sharpe ratio. Even though the cumulative returns do not track well, there is still a 90% correlation with the timestep returns. This demonstrates that significant improvements in the risk profile can be made if exact tracking is not the primary objective.

When using quantum computing for non-linearly constrained optimization, with cardinality constraints it is possible to create smaller and better performing portfolios whilst retaining a high degree of similarity to popular financial indexes.

While the applicant's teachings described herein are in conjunction with various embodiments for illustrative purposes, it is not intended that the applicant's teachings be limited to such embodiments as the embodiments described herein are intended to be examples. On the contrary, the applicant's teachings described and illustrated herein encompass various alternatives, modifications, and equivalents, without departing from the embodiments described herein, the general scope of which is defined in the appended claims.

## 7 References

[1] G. Rosenberg, P. Haghnegahdar, P. Goddard, P. Carr, K. Wu, M. Lo'pez De Prado, G. Rosenberg, P. Goddard, P. Haghnegahdar, P. Carr, and K. Wu 10.1109/JSTSP.2016.2574703 (2016), arXiv:1508.06182v3.

[2] J. Cohen, A. Khan, and C. Alexander, 10.48550/arxiv.2007.01430 (2020), arXiv:2007.01430.

[3] J. Cohen, A. Khan, and C. Alexander, 10.48550/arxiv.2008.08669 (2020), arXiv:2008.08669.

[4] S. Palmer, S. Sahin, R. Herna'ndez, S. Mugel, and R. Oru's, arXiv:2106. 06735v4.

[5] S. Certo, A. D. Pham, and D. Beaulieu, (2022), arXiv:2203.04912v1.

[6] S. Mugel, M. Abad, M. Bermejo, J. Sa'nchez, E. Lizaso, and R. Oru's, Scientific Reports 2021 11:1 11, 1 (2021), arXiv:2012.01091.

[7] S. Mugel, C. Kuchkovsky, E. Sanchez, S. FernandezLorenzo, J. Luis-Hita, E. Lizaso, and R. Orus, (2020), arXiv:2007.00017.

[8] T.-J. Chang, N. Meade, J. E. Beasley, and Y. M. Sharaiha, Computers & Operations Research 27, 1271 (2000).

[9] J. E. Beasley, N. Meade, and T. J. Chang, European Journal of Operational Research 148, 621 (2003).

[10] Y. Kim, D. Kang, M. Jeon, and C. Lee, https://doi.org/10.1080/0013791X.2019.1620391 **64,** 196 (2019).

[11] J. D'iaz, M. Cort'es, J. Herna'ndez, O.' Clavijo, C. Ardila, and S. Cabrales, https://doi.org/10.1080/0013791X.2019.1633450 **64,** 298 (2019).

[12] T. Jiang, S. Wang, R. Zhang, L. Qin, J. Wu, D. Wang, and S. D. Ahipasaoglu, https://doi.org/10.1080/0013791X.2019.1636169 **64,** 289 (2019).

[13] D. I. Graham and M. J. Craven, Journal of the Operational Research Society 72, 1415 (2021).

[14] S. Ferna'ndez-Lorenzo, D. Porras, and J. J. Garc'ia-Ripoll, Quantum Science and Technology 6, 034010 (2021).

[15] Problem-Solving Handbook - D-Wave System Documentation.

**Claims**

1. A system for data compression using quantum computing, the system comprising at least one processor configured to:

   - receive an initial set of assets and corresponding asset weights;
   - encode the asset weights using binary asset holding variables;
   - generate cardinality constraints for the asset weights;
   - encode the cardinality constraints into qubits;
   - minimize an optimization objective function using the qubits encoding the cardinality constraints, thereby generating a minimized optimization objective function; and
   - obtain a subset of assets that replicates a behavior of the initial set of assets based on the minimized optimization objective function.

2. The system of claim 1, wherein the optimization objective function is a quadratic unconstrained binary optimization (QUBO).

3. The system of claim 1, wherein each of the assets in the initial set of assets has a weight obtained using binary encoding.

4. The system of claim 1, wherein the initial set of assets comprises a discrete number of units limited to a Mersenne number.

5. The system of claim 1, wherein the optimization objective function is a cost function to be optimized on a quantum annealer.

6. The system of claim 1, wherein the cardinality constraints have a property that introduction of the cardinality constraints makes the optimization objection function non-convex due to selection of the assets being discrete.

7. The system of claim 1, wherein the cardinality constraints are encoded into qubits by applying indicator variables with interactions between the binary asset holding variables to eliminate high-order terms.

8. The system of claim 1, wherein the optimization objective function is windmill asset allocation optimization to replicate behavior of the target initial set of assets being a target windmill arrangement of windmill assets.

9. The system of claim 1, wherein the optimization objective function is satellite asset allocation optimization to replicate behavior of the target initial set of assets being a target satellite arrangement of satellite assets.

10. The system of claim 1, wherein the optimization objective function is index tracking optimization to replicate behavior of the target initial set of assets being a target financial index of assets.

11. A method for data compression using quantum computing, the method comprising:

- receiving an initial set of assets and corresponding asset weights;
- encoding the asset weights using binary asset holding variables;
- generating cardinality constraints for the asset weights;
- encoding the cardinality constraints into qubits;
- minimizing an optimization objective function using the qubits encoding the cardinality constraints, thereby generating a minimized optimization objective function; and
- obtaining a subset of assets that replicates a behavior of the initial set of assets based on the minimized optimization objective function.

12. The method of claim 11, wherein the optimization objective function is a quadratic unconstrained binary optimization (QUBO).

13. The method of claim 11, wherein each of the assets in the initial set of assets has a weight obtained using binary encoding.

14. The method of claim 11, wherein the initial set of assets comprises a discrete number of units limited to a Mersenne number.

15. The method of claim 11, wherein the optimization objective function is a cost function to be optimized on a quantum annealer.

FIG. 1

200

Receive initial set of assets and corresponding asset weights — 210

Encode asset weights using binary asset holding variables — 220

Generate cardinality constraints for the asset weights — 230

Encode the cardinality constraints into qubits — 240

Minimize optimization objective function using the qubits encoding the cardinality constraints — 250

Generate subset of assets that replicates the behavior of the initial set of assets based on the minimized optimization objective function — 260

**FIG. 2**

FIG. 3

FIG. 4A

FIG. 4B

FIG. 4C

**FIG. 5**

Risk Ratio λ

(610) - NDX; (620) - 0; (630) - 0.05; (640) - 0.1; (650) - 0.2; (660) - 0.5

**FIG. 6A**

Risk Ratio λ

(610) - NDX;     (620) - 0;     (630) - 0.05;     (640) - 0.1;     (650) - 0.2;     (660) - 0.5

**FIG. 6B**

EP 4 521 308 A1

Europäisches
Patentamt

European
Patent Office

Office européen
des brevets

# EUROPEAN SEARCH REPORT

Application Number

EP 23 38 2923

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAMUEL PALMER ET AL: "Financial Index Tracking via Quantum Computing with Cardinality Constraints", ARXIV.ORG, CORNELL UNIVERSITY LIBRARY, 201 OLIN LIBRARY CORNELL UNIVERSITY ITHACA, NY 14853, 24 August 2022 (2022-08-24), XP091301775, * page 1, column 1, paragraph 1 – paragraph 2 * * page 1, column 2, paragraph 3 – paragraph 4 * * page 2, column 1, paragraph 3 * * page 2, column 2 * * page 2, column 2, paragraph 2 * * Equation 9; page 3, column 1 * * page 5, column 2, paragraph 3 * * page 6, column 1, paragraph 1 * * Equation 3 * * page 2, column 1, paragraph 1 * * page 2, column 2, paragraph 4 * * abstract * ----- | 1–15 | INV. G06N10/60 G06N5/01 G06Q10/04 G06Q40/06 |
| | | | TECHNICAL FIELDS SEARCHED (IPC) |
| | | | G06N G06Q |

The present search report has been drawn up for all claims

| Place of search | Date of completion of the search | Examiner |
|---|---|---|
| The Hague | 13 February 2024 | Tidriri, Khaoula |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...............................................................................
& : member of the same patent family, corresponding
   document

EPO FORM 1503 03.82 (P04C01)

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. ROSENBERG ; P. HAGHNEGAHDAR ; P. GODDARD ; P. CARR ; K. WU ; M. LO'PEZ DE PRADO ; G. ROSENBERG ; P. GODDARD ; P. HAGHNEGAHDAR ; P. CARR.** *arXiv:1508.06182v3*, 2016
- **J. COHEN ; A. KHAN ; C. ALEXANDER.** *arXiv:2007.01430*, 2020
- **J. COHEN ; A. KHAN ; C. ALEXANDER.** *arXiv:2008.08669*, 2020
- **S. PALMER ; S. SAHIN ; R. HERNA'NDEZ ; S. MUGEL ; R. ORU'S.** *arXiv:2106. 06735v4*
- **S. CERTO ; A. D. PHAM ; D. BEAULIEU.** *arXiv:2203.04912v1*, 2022
- **S. MUGEL ; M. ABAD ; M. BERMEJO ; J. SA'NCHEZ ; E. LIZASO ; R. ORU'S.** Scientific Reports. *arXiv:2012.01091*, 2021, vol. 11 (1), 11, 1
- **S. MUGEL ; C. KUCHKOVSKY ; E. SANCHEZ ; S. FERNANDEZLORENZO ; J. LUIS-HITA ; E. LIZASO ; R. ORUS.** *arXiv:2007.00017*, 2020
- **T.-J. CHANG ; N. MEADE ; J. E. BEASLEY ; Y. M. SHARAIHA.** *Computers & Operations Research*, 2000, vol. 27, 1271
- **J. E. BEASLEY ; N. MEADE ; T. J. CHANG.** *European Journal of Operational Research*, 2003, vol. 148, 621
- **D. I. GRAHAM ; M. J. CRAVEN.** *Journal of the Operational Research Society*, 2021, vol. 72, 1415
- **S. FERNA'NDEZ-LORENZO ; D. PORRAS ; J. J. GARC'IA-RIPOLL.** *Quantum Science and Technology*, 2021, vol. 6, 034010
- Problem-Solving Handbook. D-Wave System